# EUROPEAN PATENT APPLICATION

(11) **EP 1 616 781 A1**
(43) Date of publication of application: **18.01.2006**
(21) Application number: 04425530.5
(22) Date of filing: 15.07.2004
(51) Int. Cl.: B62M 9/10, B60B 27/02

(54) **Sprocket-carrying body for the rear wheel of a bicycle**

(71) Applicant: CAMPAGNOLO S.R.L., I-36100 Vicenza (IT)
(72) Inventor: Meggiolan, Mario, 36051 Vicenza (IT)
(74) Representative: Checcacci, Giorgio

(57) **Abstract**

The invention refers to a sprocket-carrying body (100) for a rear wheel of a bicycle, comprising:
- a tubular body (101), suitable for externally receiving a plurality of sprockets;
- a plurality of ribs (1,2,3,4,7,8,9) at an outer surface of the tubular body (101), said ribs (1,2,3,4,7,8,9) extending in a substantially axial direction between a first end portion (102) of the tubular body (101), suitable for to receiving sprockets with a larger diameter, and a second end portion (103) of the tubular body (101), suitable for receiving sprockets with a smaller diameter. In order to reduce the weight of the sprocket-carrying body (100) at least one rib (1,2,3) comprises a portion with reduced cross-sectional area (21,22,23) with respect to the cross-sectional area of said rib (1,2,3) at said first or said second end portion (102,103) of said tubular body (101) .

## Description

The present invention refers to a sprocket-carrying body for a rear wheel of a bicycle, i.e. a device used to assemble a set of sprockets and to allow its rotation together with a rear wheel hub of a bicycle.

The sprocket-carrying body is one of the components of a unidirectional transmission device commonly used to transmit motion from the chain to the rear wheel of a bicycle and known with the term: freewheel. Such a device allows the hub to be made rotating integrally with the set of sprockets when pedalling, whilst it allows free rotation of the hub with respect to the sprockets not rotating when the bicycle is moving forward and the cyclist is not pedalling.

The sprocket-carrying body essentially consists of a tubular body, which is mechanically coupled at its outer surface with central assembly openings defined in the sprockets. The outer surface of the sprocket-carrying body has a plurality of substantially axial ribs, suitable for coupling with corresponding seats formed at the central assembly openings of each sprocket.

The sprockets are mounted axially on the sprocket-carrying body, starting from the sprocket with the largest diameter, so that when the sprocket-carrying body is mounted on the bicycle, the sprockets with a larger diameter are positioned inwardly, i.e. close to the rear wheel, and the sprockets with a smaller diameter are positioned outwardly.

The ribs on the outer surface of the sprocket-carrying body carry out two main functions. A first function is that of preventing the rotation of the sprockets with respect to the sprocket-carrying body, allowing the torque of each sprocket to be transmitted to the hub of the rear wheel. In order to carry out this function the ribs must be designed in such a way as to ensure sufficient structural strength to the torque that each sprocket transmits to the sprocket-carrying body. In this regard, it should be noted that the larger the diameter of the sprockets the greater the torques transmitted by them and therefore the stresses are greater where the sprockets with a larger diameter are mounted.

A second function of the ribs is that of providing each axial portion of the sprocket-carrying body with an assembly key for the correct angular positioning of the corresponding sprocket. Throughout the present description and the following claims, the term: assembly key, is used to indicate a particular profile of an axial portion of the outer surface of the sprocket-carrying body adapted to univocally define the angular position of a sprocket at said axial portion. The assembly key allows to maintain a predetermined mutual angular phasing between sprockets, which is necessary for the correct operation of the gearshift of the bicycle. In the prior art an assembly key is typically defined by forming, at a generic cross section of the sprocket-carrying body, a plurality of circular sectors of equal angular width, each having a raised portion, for example a rib, and a non-raised portion, for example a groove, at the outer surface of the sprocket-carrying body. The univocality of an assembly key can be determined, for example, by fixing a different relative circumferential extension of the raised and non-raised portions of a particular circular sector, with respect to that of the remaining circular sectors.

The Applicant has noted that the sprocket-carrying bodies of the prior art, although suitable for carrying out the functions outlined above, are substantially oversized for such purposes. This determines an increase in weight that is not associated with particular advantages in terms of increased structural strength or improved functionality of the sprocket-carrying body.

A constant demand of manufacturers of bicycles and/or of bicycle components, especially of racing bicycles, is that of minimizing the overall weight of the bicycle and, therefore, of the various components of the bicycle. According to such a requirement, the Applicant has designed and manufactured a sprocket-carrying body for the rear wheel of a bicycle having a reduced weight with respect to sprocket-carrying bodies of the prior art, whilst still maintaining the same functional characteristics.

According to a first aspect thereof, the present invention therefore refers to a sprocket-carrying body for the rear wheel of a bicycle, comprising:
- a tubular body, suitable for externally receiving a plurality of sprockets;
- a plurality of ribs at an outer surface of the tubular body, said ribs extending in a substantially axial direction between a first end portion of the tubular body, suitable for receiving sprockets with a larger diameter, and a second end portion of the tubular body, suitable for receiving sprockets with a smaller diameter,

characterised in that at least one rib comprises a portion with a reduced cross-sectional area with respect to the cross-sectional area of said rib at the first or second end portion of the tubular body.

Providing one or more ribs with portions having a reduced cross-sectional area advantageously allows the volume of the ribs to be decreased and therefore the whole sprocket-carrying body to be lightened, without altering its performance in terms of structural strength and functionality. Indeed, the volume reduction of the ribs can be selectively and flexibly carried out by reducing the cross-sectional area of the ribs only where and/or to the extent that it does not compromise the structural strength of such ribs and of the sprocket-carrying body. Moreover, such a volume reduction does not change the total number and the mutual arrangement of the ribs, therefore the sprocket-carrying body of the invention can mount standard sprockets, completely similar to those that can be used with sprocket-carrying bodies of the prior art.

In a preferred embodiment of the invention, said rib portion with reduced cross-sectional area is defined at the first or second end portion of the tubular body. In the first case the first end portion of the tubular body is preferably lightened, whereas the second end portion, at which the assembly of the sprockets is carried out, remains unchanged. In particular, the profile with the assembly key of the prior art remains unchanged. This is advantageous for the assembly operations of the sprockets, since the aforementioned profile perfectly matches that defined on the central assembly openings of the sprockets. In the second case, instead, the second end portion of the tubular body is preferably lightened, leaving the volume of the ribs at the first end portion unchanged. This advantageously ensures greater structural strength where the sprockets with a larger diameter are mounted and therefore the torques transmitted are greater.

In another preferred embodiment of the invention, said rib portion with reduced cross-sectional area is defined at the first or second end portion and at a substantially intermediate portion of the tubular body. A greater reduction in the overall volume of the ribs is thus achieved, while maintaining the same advantages outlined above in relation to the volume reduction of the ribs at just the first or second end portion of the tubular body.

In a further preferred embodiment of the invention, said rib portion with reduced cross-sectional area is defined at a substantially intermediate portion of said tubular body. This embodiment advantageously allows a volume reduction of the ribs to be achieved, at the same time maintaining both the maximum rib volume at the first end portion, and the profile with the assembly key of the prior art at the second end portion.

Preferably, the rib width at said portion with reduced cross-sectional area is at least partially axially constant. The reduction of the cross-sectional area of the rib in this case can be obtained in a simple manner through simple material-removing machining.

In another preferred embodiment of the invention the rib width at said portion with reduced cross-sectional area decreases axially in the direction of the second end portion of the tubular body. Advantageously, with this embodiment a gradual decrease in the volume of the ribs is obtained that substantially follows the decrease in the diameters of the sprockets and therefore of the torques transmitted to the sprocket-carrying body.

In an alternative embodiment the rib width at said portion with reduced cross-sectional area decreases axially in the direction of the first end portion of said tubular body.

In a further embodiment of the invention, at said rib portion with reduced cross-sectional area such a reduced cross-sectional area is substantially zero. The limit condition of complete removal of a rib portion is thus achieved, advantageously giving a greater lightening of the sprocket-carrying body.

Preferably, at the transition between a portion with maximum sectional area and said portion with reduced sectional area the height of the rib decreases at least partially with continuity from a maximum value to a substantially zero value. The formation of steps due to the section reduction, which could make the assembly of the sprockets more difficult, is thus advantageously avoided.

According to a second aspect thereof, the present invention refers to a hub for the rear wheel of a bicycle comprising a sprocket-carrying body having the characteristics outlined above. Such a hub has all of the advantageous characteristics discussed above with reference to the sprocket-carrying body of the invention.

According to a third aspect thereof, the present invention refers to a rear wheel of a bicycle comprising the aforementioned hub.

Further characteristics and advantages of the present invention shall become clearer from the following description of some preferred embodiments thereof, given hereafter for indicating and not limiting purposes, with reference to the attached drawings. In such drawings:
- figure 1 is a perspective view of a sprocket-carrying body for the rear wheel of a bicycle according to a first preferred embodiment of the invention;
- figure 2 is a perspective view of the sprocket-carrying body of figure 1 cut at a first cross section plane;
- figure 3 is a perspective view of the sprocket-carrying body of figure 1 cut at a second cross section plane;
- figure 4 is a plan view of the section of the sprocket-carrying body of figure 3;
- figure 5 is a perspective view of a sprocket-carrying body for the rear wheel of a bicycle according to a second preferred embodiment of the invention;
- figure 6 is a perspective view of the sprocket-carrying body of figure 5 cut at a first cross section plane;
- figure 7 is a perspective view of the sprocket-carrying body of figure 5 cut at a second cross section plane;
- figure 8 is a plan view of the section of the sprocket-carrying body of figure 7;
- figure 9 is a perspective view of a sprocket-carrying body for the rear wheel of a bicycle according to a third preferred embodiment of the invention;
- figure 10 is a perspective view of the sprocket-carrying body of figure 9 cut at a first cross section plane;
- figure 11 is a perspective view of the sprocket-carrying body of figure 9 cut at a second cross section plane;
- figure 12 is a plan view of the section of the sprocket-carrying body of figure 11;
- figure 13 is a perspective view of a sprocket-carrying body for the rear wheel of a bicycle according to a fourth preferred embodiment of the invention;
- figure 14 is a perspective view of the sprocket-carrying body of figure 13 cut at a first cross section plane;
- figure 15 is a perspective view of the sprocket-carrying body of figure 13 cut at a second cross section plane;
- figure 16 is a plan view of the section of the sprocket-carrying body of figure 15;
- figure 17 is a perspective view of a hub for the rear wheel of a bicycle associated with a sprocket-carrying body according to the invention;
- figure 18 is a perspective view of a hub for the rear wheel of a bicycle associated with a sprocket-carrying body according to the invention having a plurality of sprockets mounted thereon;
- figure 19 is a perspective view of a rear wheel of a bicycle mounting the hub of figure 17.

In such figures a sprocket-carrying body for a rear wheel of a bicycle 400 in accordance with the invention is globally indicated with reference numeral 100. Structurally or functionally equivalent elements in the embodiments of the sprocket-carrying body 100 illustrated in such figures are indicated with the same reference numeral.

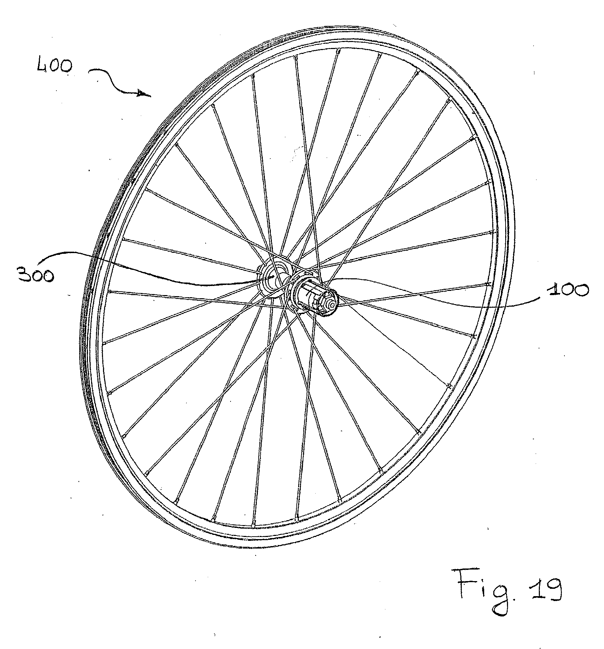

The sprocket-carrying body 100 essentially consists of a tubular body 101 of predetermined thickness, which extends along a longitudinal axis X. At a first end portion 102, the tubular body 101 comprises mechanical coupling elements 105 with a hub 300 through a transmission device with a freewheel, *per se* known and here not illustrated in detail. The hub 300 is in turn associated in a conventional manner with a rear wheel 400 of a bicycle, as shown in figure 19. A second end portion 103 of the tubular body 101, axially opposite the first end portion 102, is free. With reference to the configuration of the sprocket-carrying body 100 mounted on a bicycle (figure 19), the first end portion 102 is inwardly arranged, near to the rear wheel 400, whereas the second end portion 103 is outwardly arranged.

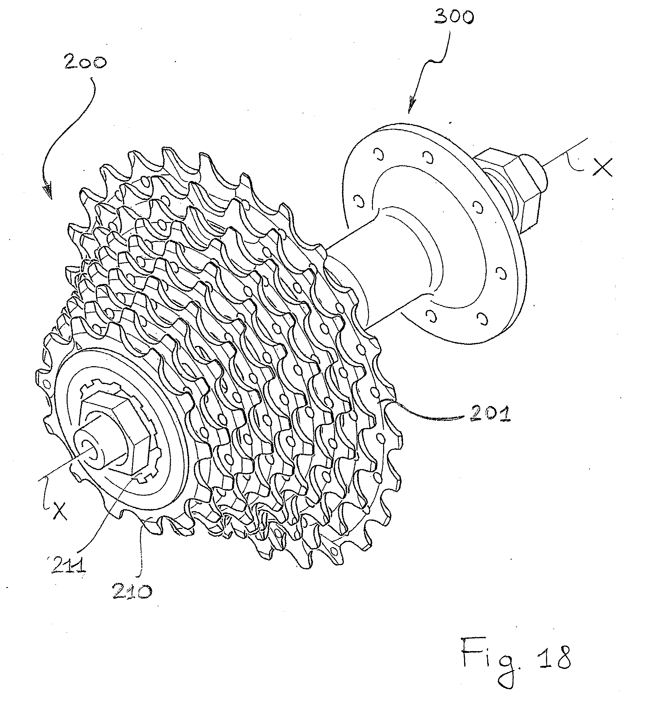

The sprocket-carrying body 100 is suitable for externally receiving a plurality of sprockets 200, which are axially mounted from the side of the second end portion 103 of the tubular body 101, with an order such that the sprocket with the largest diameter 201 is arranged at the first end portion 102 of the tubular body 101, and the sprocket with the smallest diameter 210 is arranged at the second end portion 103 of the tubular body 101, as shown in figure 18 (in this figure the sprocket-carrying body 100 is not visible due to the sprockets 200 mounted on it).

The tubular body 101 is externally provided with a plurality of ribs 1-9, substantially rectilinear and extending in a substantially axial direction. Such ribs 1-9 are suitable for coupling with corresponding seats with matching shape, formed at central assembly openings 211 of each sprocket (in figure 18 only the central assembly opening of the sprocket with the smallest diameter 210 can be seen). Preferably, the cross section of the ribs 1-9 and of the seats with matching shape on the central assembly openings 211 is perimetrically defined by a pair of concentric arcs of circumference and by a pair of opposite rectilinear sides parallel to each other.

At the first end portion 102 of the tubular body 101 each rib 1-9 is provided with corresponding abutment projections 20, against which the sprocket with the greatest diameter is arranged in abutment. In an alternative embodiment that is not shown the abutment projections 20 are not formed integrally with the tubular body 101, but rather are defined on a ring nut subsequently mounted on it at the first end portion 102. In such a case, the ring nut and the abutment projections 20 can be made from a different material to that of the tubular body 101.

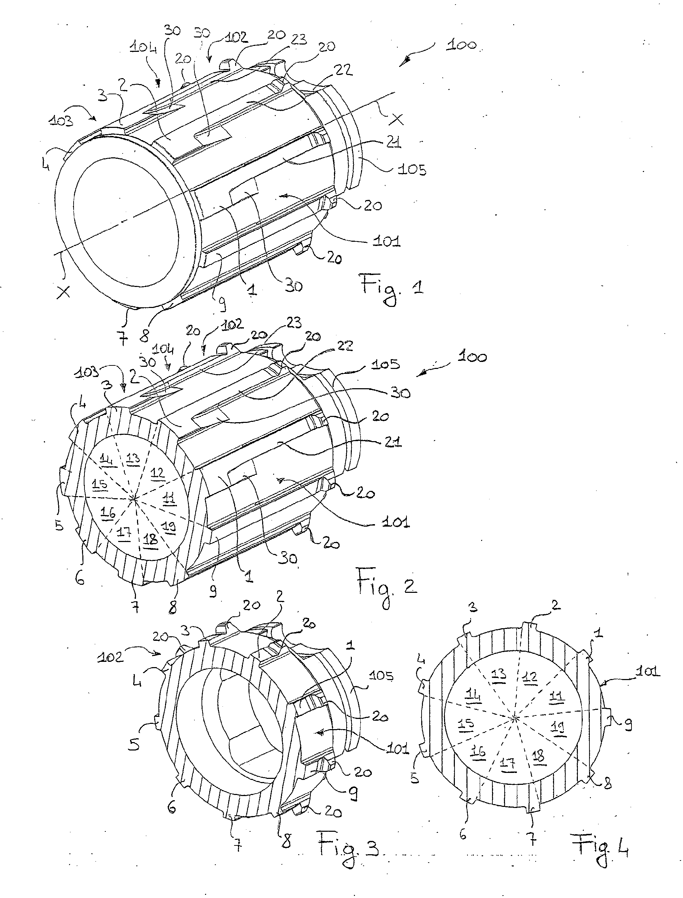

As outlined above, the ribs 1-9 substantially prevent the rotation of the sprockets 200 with respect to the sprocket-carrying body 100 and are sized as to ensure sufficient structural strength to the torque that each sprocket can transmit. Moreover, the ribs 1-9, at each axial portion of the tubular body 101, define an assembly key for the corresponding sprocket, ensuring the correct angular phasing of the sprockets 200 mounted on the sprocket-carrying body 100 (figure 18). In the preferred embodiments described here, an assembly key is used having a basic configuration that is known and defined on nine circular sectors 11-19, each of a size equal to 40°. At each sector 11-19 there is a raised portion, corresponding to one of the ribs 1-9, and a non-raised portion. At the sectors 11-18 the raised portion and the non-raised portion have the same circumferential extension, whereas at the sector 19 the non-raised portion extends circumferentially more than the raised portion (see, for example, sections of figures 2, 6 and 10).

According to the present invention, in order to achieve the desired weight reduction of the sprocket-carrying body 100, some of the ribs 1-9 have portions with reduced cross-sectional area 21-29 (only some of them can be seen in the figures). The cross-sectional area at the portions with reduced cross-sectional area 21-29 can also be zero, i.e. the rib at such portions can also be completely removed. In these cases the assembly key shall circumferentially have a variable total number of raised portions, based on the axial portion of the tubular body 101 considered. The cross-sectional area of the rib 9, which defines the uniqueness of the assembly key, preferably does not undergo reductions, so as not to alter the assembly key along the axis X of the sprocket-carrying body 100.

Preferably, the reduction of the cross-sectional area at the portions with reduced cross-sectional area 21-29 is such as to leave the substantially rectilinear profile of the edge of the ribs 1-9, which is active in the transmission of the torque from the sprockets 200 to the sprocket-carrying body 100 during pedalling, unchanged. In such a way, even if portions with reduced cross-sectional area 21-29 are present, the stability of the coupling of the sprocket-carrying body 100 with the sprockets is not compromised in any way.

At the transition zones between a portion with maximum cross-sectional area and a portion with reduced or zero cross-sectional area the ribs 1-9 preferably have ramp portions 30, at which the height of the rib reduces at least partially with continuity from a maximum value to a substantially zero value.

According to a first embodiment of the invention (figures 1-4) all of the ribs 1-9 extend axially from the first end portion 102 to the second end portion 103 of the tubular body 101 and each of them, except for the rib 9, comprises, at the first end portion 102 and at a substantially intermediate portion 104 of the tubular body 101, a respective portion with reduced cross-sectional area and constant width (in figures 1 and 2 only the portions 21, 22 and 23, respectively belonging to the ribs 1, 2 and 3, can be seen). At the first end portion 102 and at the substantially intermediate portion 104 of the tubular body 101 the overall volume of the ribs 1-9 is therefore reduced and substantially axially constant. The assembly key comprises all of the ribs 1-9 (see figures 3 and 4). At the second end portion 103 the overall volume of the ribs 1-9 is maximum and the assembly key has exactly the basic configuration described above.

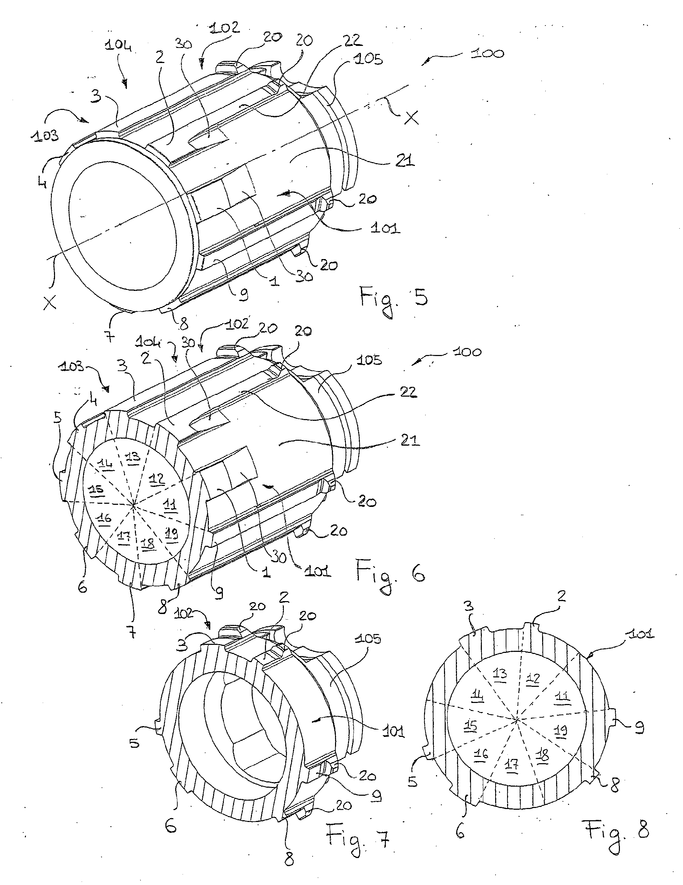

According to a second embodiment of the invention (figures 5-8) the sprocket-carrying body 100 comprises:
- three ribs 3, 6 and 9 that extend axially from the first end portion 102 to the second end portion 103 of the tubular body 101 maintaining the same cross section along their entire length;
- three ribs 2, 5 and 8 that have, at the first end portion 102 and at a substantially intermediate portion 104 of the tubular body 101, respective portions 22, 25 and 28 with reduced cross-sectional area and constant width (in figures 5 and 6 only the portion 22 of the rib 2 can be seen);
- three ribs 1, 4 and 7 that extend axially only at the second end portion 103 of the tubular body 101.

At the first end portion 102 and at the substantially intermediate portion 104 of the tubular body 101 the overall volume of the ribs 1-9 is reduced to a greater extent with respect to the first embodiment described above (in any case still sufficient to ensure the structural strength of the sprocket-carrying body 100), and substantially constant axially. The assembly key comprises the ribs 2, 3, 5, 6, 8 and 9 only (see figures 7 and 8). At the second end portion 103 the overall volume of the ribs 1-9 is maximum and the assembly key has exactly the basic configuration described above.

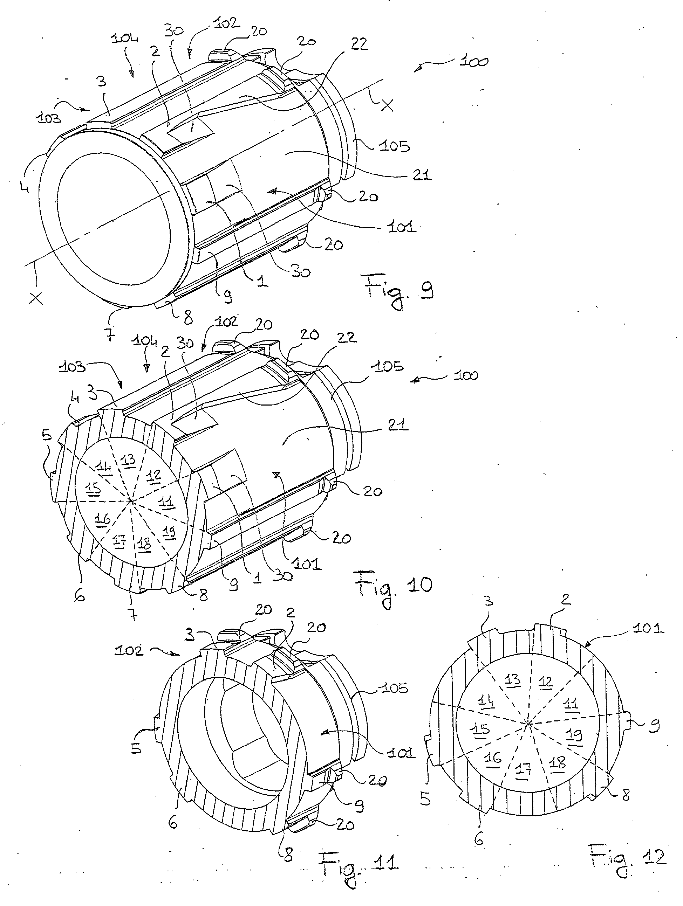

According to a third embodiment of the invention (figures 9-12) the sprocket-carrying body 100 comprises:
- three ribs 3, 6 and 9 that extend axially from the first end portion 102 to the second end portion 103 of the tubular body 101 maintaining the same cross section along their entire length;
- three ribs 2, 5 and 8 that have, at the first end portion 102 and at the substantially intermediate portion 104 of the tubular body 101, respective portions 22, 25 and 28 with reduced cross-sectional area and increasing width towards the first end portion 102 (in figures 9 and 10 only the portion 22 of the rib 2 can be seen);
- three ribs 1, 4 and 7 that extend axially only at the second end portion 103 of the tubular body 101.

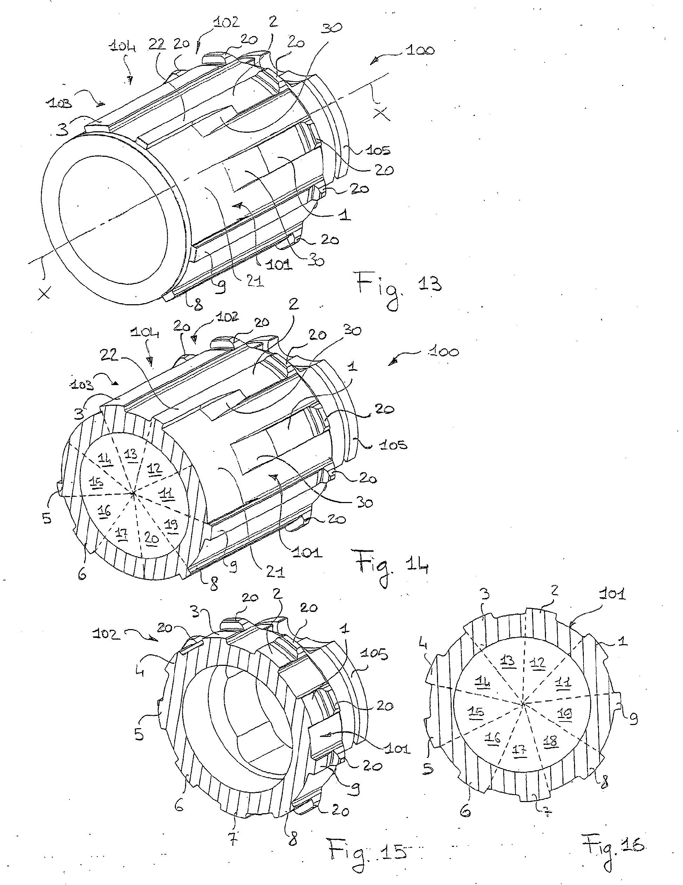

At the first end portion 102 and at a substantially intermediate portion 104 of the tubular body 101 the overall volume of the ribs 1-9 is reduced, but larger than that of the second embodiment described above due to the gradual increase in width of the ribs 2, 5, 8 towards the first end portion 102, where they once again have maximum cross-sectional area (see figures 9 and 10). As outlined above, such an increase in width substantially follows the increase in the diameters of the sprockets 200 and therefore of the torques they transmit to the sprocket-carrying body 100. At the first end portion 102 the overall volume of the ribs 1-9 is in any case still reduced and the assembly key comprises the ribs 2, 3, 5, 6, 8 and 9 only (see figures 11 and 12). At the second end portion 103 the overall volume of the ribs 1-9 is maximum and the assembly key has exactly the basic configuration described above.

In an alternative embodiment, not illustrated, all of the ribs 1-9 extend axially from the first end portion 102 to the second end portion 103 of the tubular body 101 and each of them, except for the rib 9, comprises a respective portion with reduced cross-sectional area and increasing width in the direction of the first end portion 102, where the width and the cross-sectional area of such ribs have again their maximum value.

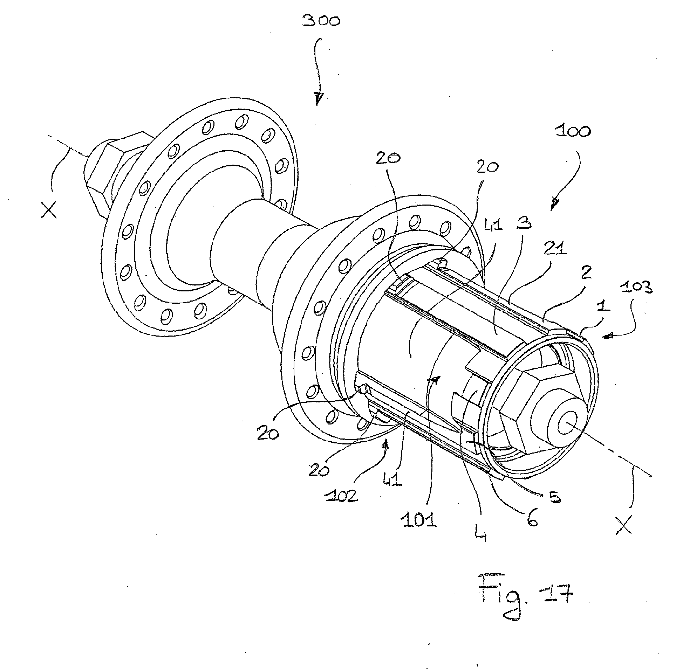

According to a fourth embodiment of the invention (figures 13-16) the sprocket-carrying body 100 comprises:
- three ribs 3, 6 and 9 that extend axially from the first end portion 102 to the second end portion 103 of the tubular body 101 maintaining the same cross section along their entire length;
- three ribs 2, 5 and 8 that have, at the second end portion 103 and at a substantially intermediate portion 104 of the tubular body 101, respective portions 22, 25 and 28 with reduced cross-sectional area and constant width (in figures 13 and 14 only the portion 22 of the rib 2 can be seen);
- three ribs 1, 4 and 7 that extend axially only at the first end portion 102 of the tubular body 101.

At the second end portion 103 and at the substantially intermediate portion 104 of the tubular body 101 the overall volume of the ribs 1-9 is minimum and substantially constant. The assembly key comprises the ribs 2, 3, 5, 6, 8 and 9 only (see figure 14). At the first end portion 102 the overall volume of the ribs 1-9 is maximum and the assembly key has exactly the basic configuration described above.

Irrespective of the embodiment of the sprocket-carrying body 100, the sprockets 200 can be mounted on it according to two ways. In a first way, the sprockets 200 are mounted onto the sprocket-carrying body 100 at the second end portion 103 of the tubular body 101, one at a time from the largest 201 to the smallest 210, possibly inserting spacer elements that ensure the correct spacing of the sprockets along the axis X. In a second way, two or more sprockets 200 are preassembled on a support that also acts as a spacer and then mounted onto the sprocket-carrying body 100 at the second end portion 103 of the tubular body 101 to form the complete set of sprockets.

## Claims

1. Sprocket-carrying body (100) for a rear wheel of a bicycle (400), comprising:
- a tubular body (101), suitable for externally receiving a plurality of sprockets (200);
- a plurality of ribs (1-9) at an outer surface of said tubular body (101), said ribs (1-9) extending in a substantially axial direction between a first end portion (102) of said tubular body (101), suitable for receiving sprockets with a larger diameter (201), and a second end portion (103) of said tubular body (101), suitable for receiving sprockets with a smaller diameter (208),
**characterised in that** at least one rib (1-8) comprises a portion with reduced cross-sectional area (21-28) with respect to the cross-sectional area of said rib (1-8) at said first or said second end portion (102,103) of said tubular body (101).

2. Sprocket-carrying body (100) according to claim 1, **characterised in that** said portion with reduced cross-sectional area (21-28) is defined at said first or said second end portion (102, 103) of said tubular body (101).

3. Sprocket-carrying body (100) according to claim 1, **characterised in that** said portion with reduced cross-sectional area (21-28) is defined at said first or said second end portion (102, 103) and at a substantially intermediate portion (104) of said tubular body (101).

4. Sprocket-carrying body (100) according to claim 1, **characterised in that** said portion with reduced cross-sectional area (21-28) is defined at a substantially intermediate portion (104) of said tubular body (101).

5. Sprocket-carrying body (100) according to any one of the previous claims, **characterised in that** the width of said at least one rib (1-8) at said portion with reduced cross-sectional area (21-28) is at least partially axially constant.

6. Sprocket-carrying body (100) according to any one of claims 1 to 4, **characterised in that** the width of said at least one rib (1-8) at said portion with reduced cross-sectional area (21-28) decreases axially in the direction of said second end portion (103) of said tubular body (101).

7. Sprocket-carrying body (100) according to any one of claims 1 to 4, **characterised in that** the width of said at least one rib (1-8) at said portion with reduced cross-sectional area (21-28) decreases axially in the direction of said first end portion (102) of said tubular body (101).

8. Sprocket-carrying body (100) according to any one of claims 1 to 4, **characterised in that** at said portion with reduced cross-sectional area (21-28) said reduced cross-sectional area is substantially zero.

9. Sprocket-carrying body (100) according to any one of the previous claims, **characterised in that** at the transition between a portion with maximum sectional area and said portion with reduced sectional area (21-28) the height of said at least one rib (1-8) decreases at least partially with continuity from a maximum value to a substantially zero value.

10. Hub (300) for the rear wheel of a bicycle (400) comprising a sprocket-carrying body (100) according to any one of the previous claims.

11. Rear wheel of a bicycle (400) comprising a hub (300) according to claim 10.
